# EUROPÄISCHE PATENTSCHRIFT

(11) **EP 2 403 698 B1**
(45) Veröffentlichungstag und Bekanntmachung des Hinweises auf die Patenterteilung: **03.07.2013**
(21) Anmeldenummer: 10706586.4
(22) Anmeldetag: 22.02.2010
(51) Int. Cl.: B29B 7/76, B29B 7/90, B01F 5/20, B29C 70/30, B29B 7/80

(54) **VORRICHTUNG ZUM HERSTELLEN VON MIT VERSTÄRKUNGSFASERN DURCHSETZTEN KUNSTSTOFFTEILEN**
APPARATUS FOR PRODUCING PLASTIC PARTS INTERSPERSED WITH REINFORCING FIBRES
DISPOSITIF DE FABRICATION D'ÉLÉMENTS EN PLASTIQUE CONTENANT DES FIBRES DE RENFORCEMENT

(30) Priorität: 05.03.2009 DE 102009011900
(43) Veröffentlichungstag der Anmeldung: 11.01.2012
(73) Patentinhaber: KraussMaffei Technologies GmbH, 80997 München (DE)
(72) Erfinder: AGERER, Markus, 82178 Puchheim (DE); RENKL, Josef, 85229 Markt Indersdorf (DE)
(74) Vertreter: Wilhelm, Ludwig
(86) Internationale Anmeldenummer: PCT/EP2010/052180
(87) Internationale Veröffentlichungsnummer: WO 2010/100045

(56) Entgegenhaltungen:
- EP-A1- 0 895 815
- WO-A1-2005/113215
- DE-A1- 2 601 368
- DE-U1- 29 505 082
- US-B1- 6 453 926

## Beschreibung

Die vorliegende Erfindung betrifft eine Vorrichtung zum Herstellen von mit Verstärkungsfasern durchsetzten Kunststoffteilen gemäß dem Oberbegriff des Anspruchs 1.

Solche Vorrichtungen sind aus dem Stand der Technik bekannt. So ist in der EP 771 259 B1 eine gattungsgemäße Vorrichtung zum Herstellen von mit Verstärkungsfasern durchsetzten Kunststoffteilen angegeben, bei der ein Reinigungskolben in einer Auslaufkammer hin und her beweglich geführt ist. Der Reinigungskolben weist einen intern ausgebildeten Faser-Förderkanal auf. Zwischen dem Reinigungskanal und der zylindrischen Auslaufkammer ist ein Ringraum vorgesehen, durch den das in einer Mischkammer hergestellte reaktive System parallel zum Faser-Förderkanal in Richtung des Auslasses transportiert wird. Am Ende des Reinigungskolbens vereinigt sich der Strom aus reaktivem Ausgangsmaterial mit den im Faser-Förderkanal zugeführten Fasern.

Aus der DE 26 28 854 A1 ist ein Verfahren zur Herstellung von glasfaserverstärkten Formteilen bekannt, bei dem in einer Mischkammer ein reaktives Material gebildet wird, welches über eine Düse ausgebracht wird. In den Strahl aus dem reaktiven Materialgemisch werden außerhalb der Vorrichtung ein oder mehrere Faserstrahle zugeführt.

Aus der DE-OS 20 17 548 ist ein Verfahren und eine Vorrichtung zum kontinuierlichen, dosierten Einbringen von Füllstoff mit Schaumstoffmassen bekannt, bei dem innerhalb eines Dosierstutzens ein Fasermaterial geführt ist, welches am Ende des Dosierstutzens in eine Auslaufkammer austritt. Zwischen dem Dosierstutzen und dem Mantelgehäuse ist ein Ringkanal gebildet, an dessen unteren Ende Ringdüsen zwischen dem Mantelgehäuse und dem Dosierstutzen ausgebildet sind, so dass das reaktive Materialgemisch über diese Ringdüsen in diesen Faserstrom eingebracht werden kann. Diese Vorrichtung ist jedoch für einen hin- und her beweglichen Reinigungskolben nicht verwendbar.

Die DE 28 23 189 A1 beschreibt einen Mischkopf, bei dem über einen Kanal ein Fasermaterial einem Mischkopf zugeführt wird. In eine Mischkammer, in die das Fasermaterial eingegeben wird, weisen zwei Einspritzdüsen, die die einzelnen reaktiven Komponenten oder das reaktive Gemisch einbringen. Anschließend wird das mit dem reaktiven Material getränkte Fasermaterial über einen Austrag ausgebracht.

In der DE 26 01 368 A1 ist eine Vorrichtung zur Herstellung von faserverstärkten Konstruktionsteilen beschrieben, bei der in einem Mischkopf ein inneres Rohr angeordnet ist, dem ein Faserstrom mit luftgeführten Fasern zugeführt werden kann. Gleichzeitig wird über das Rohr eine Druckluft eingebracht, die am vorderen Ende über zur Rohrachse geneigten Bohrungen austritt. Gleichzeitig kann zwischen einem Ringraum zwischen dem Mantel und dem Gehäuse ein reaktives Materialgemisch eingebracht werden, welches sich am austragsseitigen Ende mit dem Fasermaterial vereinigt. Die Luftbohrungen sind dabei zwischen dem Faserkanal und dem Ringkanal für das reaktive Material angeordnet.

In der DE 30 13 237 A1 ist ein Verfahren und eine Vorrichtung zum Herstellen eines aus mindestens zwei fließfähigen Reaktionskomponenten und Füllstoffen bestehenden Massiv- oder Schaumstoff bildenden Gemisches beschrieben. Dabei werden Reaktionskomponenten über Einspritzöffnungen in einem Mischkopf einer Mischkammer zugeführt und in eine Auslassbohrung eingebracht. Eine Füllstoffzuführung mündet ebenfalls in diese Auslassbohrung.

Die EP 0 895 815 A1 offenbart eine Vorrichtung gemäß dem Oberbegriff des Anspruchs 1.

Aufgabe der vorliegenden Erfindung ist es, einen weiteren Mischkopf anzugeben, der bei beweglichem Reinigungskolben eine möglichst optimale Vermischung zwischen einem reaktiven Materialgemisch und zugeführten Stoffen, insbesondere Faserstoffen, gewährleistet. Diese Aufgabe wird durch die im Anspruch 1 genannten Merkmale gelöst. Vorteilhafte Weiterbildungen sind Gegenstand der abhängigen Ansprüche.

Gemäß der vorliegenden Erfindung ist an der Stirnseite des Reinigungskolbens eine Düse vorgesehen, durch die sich zum einen der Faser-Förderkanal erstreckt und in der zum anderen am Außenumfang eine Ringnut angeordnet ist, die in einer Position mit der Mischkammer strömungsmäßig in Verbindung bringbar ist und in einer anderen Position keine Strömungsverbindung zur Mischkammer besitzt. Da von der Ringnut zum auslassseitigen Ende der Düse zumindest eine, vorzugsweise jedoch mehrere Düsenkanäle ausgebildet sind, wird das von der Mischkammer über die Ringnut den Düsenkanälen zur Verfügung gestellte reaktive Materialgemisch gleichsam in die zugeführten Stoffe, insbesondere die Fasern, hineinverdüst, so dass sich die zusammengeführten Materialien in besonders optimaler Weise miteinander vermischen.

Gemäß einer vorzugsweisen Ausführungsform enden die Düsenkanäle radial außerhalb des Faser-Förderkanals, so dass das reaktive Materialgemisch radial von außerhalb in den Faserstrom eingesprüht wird.

Durch besondere Ausführungsformen am Ende der Düsenkanäle, beispielsweise durch Erweiterungen (linsenförmige Erweiterungen) oder keilförmige Nuten können besondere Maßnahmen zum wirksamen Zerstäuben des reaktiven Materialgemisches erreicht werden. Eine besonders gute Einbringung des reaktiven Materials ist auch dann gegeben, wenn sich die Düsenkanäle umfangsmäßig gleichmäßig um den Faser-Förderkanal verteilen.

Vorzugsweise sollten die Achsen der Düsenkanäle in ihrer Verlängerung einen spitzen Winkel mit der Achse des Faser-Förderkanals einschließen. Der Winkel sollte zumindest im Bereich von 5° bis 85° liegen; als bevorzugte Winkelbereiche können auch Winkel zwischen 10° und 50° gewählt werden.

Gemäß einer weiteren vorzugsweisen Ausführungsform der vorliegenden Erfindung sind alle Düsenkanäle derart ausgerichtet, dass sich deren gedachte Verlängerungen in einem einzigen Schnittpunkt schneiden. Dieser Schnittpunkt kann überdies auf der zentralen Achse des Faser-Förderkanals liegen. Hinsichtlich seiner axialen Länge kann der Schnittpunkt der gedachten Verlängerungen innerhalb oder außerhalb der Auslaufkammer zum Liegen kommen. Dies hängt im Wesentlichen vom Winkel ab, mit dem die Auslassdüsen bezüglich der Längsachse ausgebildet sind.

Gemäß einer besonders bevorzugten Ausführungsform der Erfindung sind auch Luftführungsbohrungen (zumindest eine) vorgesehen, die derart bezüglich der Bewegungsrichtung des Reinigungskolbens angeordnet sind, dass sie zum einen zur Strömungsverbindung mit der Mischkammer versetzt gewählt werden und zum anderen in zumindest einer Position des Reinigungskolbens mit der Ringnut in Verbindung bringbar sind.

Gemäß einer weiteren Ausführungsform der Erfindung münden die Luftführungsbohrungen für den Fall, dass die Ringnut mit der Mischkammer in Verbindung steht, unmittelbar in den Auslaufkanal.

In einer ersten Position können die Luftführungsbohrungen die Düsenkanäle ausblasen und damit ein Festsetzen von reaktiven Materialkomponenten in den Düsenkanälen verhindern. In einer zweiten Position und für den Fall, dass sich der Mischkopf im operativen Förderbetrieb befindet, bei dem das reaktive Material über die Mischkammer und den Ringkanal sowie die Düsenkanäle in den Faser-Förderstrom eingesprüht werden, kann die Luft über die Luftzuführungsbohrungen den Transport des Gesamtstroms und die Beabstandung des Stroms von der Wandung des Mischkopfes unterstützen bzw. sicherstellen.

Eine konkrete Ausführungsform der vorliegenden Erfindung ist nachfolgend und mit Bezug auf die beigefügten Zeichnungen näher beschrieben. Die Zeichnungen zeigen in
- Fig. 1: eine schematische Frontansicht eines erfindungsgemäßen Mischkopfes,
- Fig. 2: eine schematische Teilschnittdarstellung entlang Linie A-A aus Fig. 1,
- Fig. 3: eine vergrößerte Teilschnittdarstellung gemäß des Bereichs B aus Fig. 2 und
- Fig. 4a - 4d: vier verschiedene Ausführungsformen einer Düse jeweils in einer Schnittdarstellung.

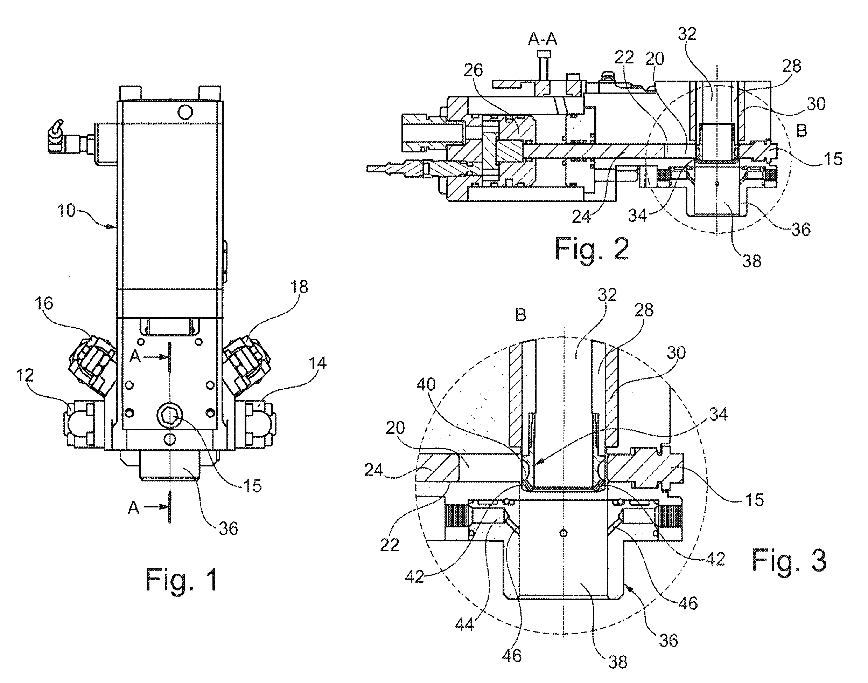

In Fig. 1 sind in schematischer Frontansicht ein Mischkopf 10 mit entsprechendem Gehäuse und zwei Materialzufuhrleitungen 12 und 14 sowie zwei Materialrückrührleitungen 16 und 18 dargestellt. Am unteren Ende des Mischkopfes 10 erkennt man ein Auslaufrohr 36, aus dem - wie nachfolgend noch erläutert wird - das Gemisch aus Fasern und reaktiven Komponenten ausgebracht wird.

In Fig. 2 ist der untere Teil des in Fig. 1 dargestellten Mischkopfes entlang der Linie A-A in einer Schnittdarstellung gezeigt. Dabei weist der Mischkopf 10 in einer Bohrung seines Gehäuses eine Buchse 30 auf, in der ein Reinigungskolben 28 hin und her beweglich geführt ist. Sowohl Buchse 30 wie auch Reinigungskolben sind vorliegend nur teilweise dargestellt (jeweils unterer Bereich). Innerhalb des Reinigungskolbens 28 ist mit kreisförmigem Querschnitt ein Faser-Förderkanal 32 ausgebildet, der koaxial zu der Gehäusebohrung verläuft.

Der Faser-Förderkanal 32 des Reinigungskolbens 28 mündet in einen koaxialen zylindrischen Auslaufkanal 38 in dem Auslaufrohr 36.

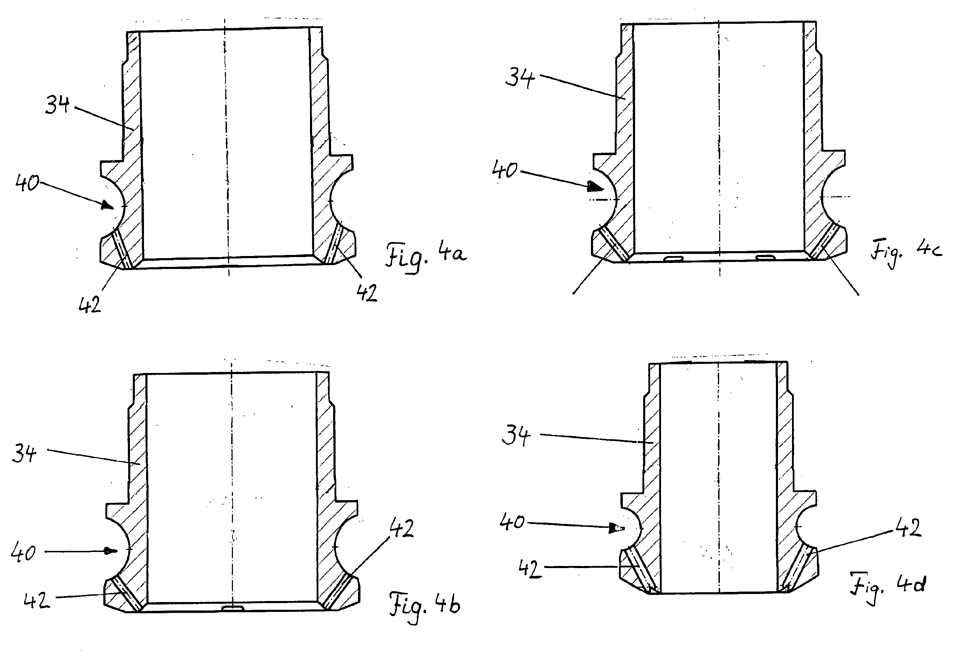

An seinem vorderen Ende weist der Reinigungskolben 28 einen Düseneinsatz 34 auf, der vergrößert in Fig. 3 zu erkennen ist. Verschiedene Ausführungsformen solcher Düsen, die nachfolgend noch genauer erläutert werden, sind in den Figuren 4a - 4d dargestellt.

In Fig. 2 ist gezeigt, dass in die Auslaufkammer 38 eine Mischkammer 20 mündet, die bei diesem Ausführungsbeispiel in einem rechten Winkel verläuft und in der die reaktiven Komponenten (z. B. Polyol und Isocyanat) eingespritzt und miteinander vermischt werden. In dieser Mischkammer 20 ist ein Steuerkolben 26 ebenfalls hin und her beweglich geführt, wobei der Antrieb des Steuerkolbens mit einem Kolben 26 in einem hydraulischen Zylinder mit entsprechenden Hydraulikleitungen realisiert ist.

Mit dem Stopfen 15 wird eine Bohrung verschlossen, die zur fertigungstechnischen Ausbildung der Mischkammer 20 dient.

Die Funktionsweise des vorgenannt beschriebenen Mischkopfes wird nun anhand der Fig. 3 erläutert.

Über Düsenöffnungen 22, von denen in Fig. 3 nur eine dargestellt ist, werden die einzelnen reaktiven Ausgangskomponenten Polyol und Isocyanat bei zurückgezogenem Steuerkolben 24 in die Mischkammer eingespritzt und im Hochdruck-Injektionsverfahren miteinander vermischt. Der Reinigungskolben 28 ist dabei in einer Position, dass eine sich über den gesamten Umfang des Düseneinsatzes 34 erstreckende Ringnut 40 sich auf Höhe der Mischkammer befindet und von dort Material empfängt. Das von der Mischkammer 20 stammende Material wird über die Ringnut umfangsmäßig um den Reinigungskolben 28 verteilt. Von der Ringnut führen - umfangsmäßig in äquidistantem Abstand angeordnet - eine Vielzahl von Düsenkanälen 42 zum vorderen, stirnseitigen Ende des Düseneinsatzes 28. Dabei enden diese Düsenkanäle 42 radial geringfügig außerhalb der radial äußeren Begrenzung des Faser-Förderkanals. Das in der Mischkammer 20 erzeugte Reaktionsgemisch wird somit über den Ringkanal 40 und die Vielzahl von Düsenkanälen 42 in V-förmiger Weise in den Faserstrahl, der durch den Faser-Förderkanal 32 gefördert wird und aus diesem austritt, eingespritzt und vermischt sich innig mit diesem. Dabei sind die Düsenkanäle 42 vorliegend mit einem Winkel von 10° - 50° zur Längsachse des Faser-Förderkanals 32 angeordnet und treffen sich allesamt in einem einzigen Schnittpunkt auf dieser Achse. Dieser Schnittpunkt liegt noch innerhalb der Auslaufkammer 38.

Durch dieses "Einstrahlen" erfolgt eine optimale Benetzung und Verwirbelung der Faser bei entsprechend zurückgezogenem Reinigungskolben, wie in Fig. 3 dargestellt. Gleichzeitig wird über vier umfangsmäßig gleichmäßig verteilt angeordnete Luftförderkanäle 46, die im Auslaufrohr 36 angeordnet sind, ebenfalls in spitzem Winkel Luft eingeblasen. Diese Luft hilft den benetzten Faserstrahl zu führen und zu fördern.

Soll nun kein Fasermaterialgemisch mehr ausgebracht werden, so wird zum einen der Faserstrom durch den Faser-Förderkanal 32 unterbunden. Zum anderen wird der Reinigungskolben 38 nach vorne verschoben und zwar derart, dass nunmehr die Ringnut 40 über den Luftkanälen 46 zu liegen kommt. Damit wird einerseits der Zufluss von reaktivem Material zur Ringnut 40 unterbunden und andererseits wird die Ringnut über die Luftkanäle 46 mit Luft versorgt, die über die Düsenkanäle 42 ausgeblasen wird. Dadurch kann man die Düsenkanäle 42 entsprechend spülen und reinigen, um so ein Festsetzen von reaktivem Material in den Düsenkanälen 42 mit der Folge einer Verstopfung zu verhindern.

Gleichzeitig mit dem Vorschieben des Reinigungskolbens 28 wird auch der Steuerkolben 24 nach vorne geschoben werden mit dem Effekt, dass die einzelnen reaktiven Ausgangsmaterialien in (nicht dargestellten) Rezirkulationsnuten in die Rückläufe 16 und 18 der einzelnen Komponenten zurückgeführt werden.

In den Figuren 4a - 4d sind verschiedene Ausführungsformen für Düseneinsätze 34 dargestellt, wobei jeder Düseneinsatz eine ansprechende Ringnut 40 und entsprechende Düsenkanäle 42 aufweist. Bei der Ausführungsform in Fig. 4a sind insgesamt vier Düsenkanäle 42 vorgesehen, die an einer im Wesentlichen planen Stirnseite in spitzem Winkel enden und äquidistant zueinander angeordnet sind. Die Ausführungsform des Düseneinsatzes 34 in Fig. 4b unterscheidet sich lediglich dadurch von demjenigen der Fig. 4a, dass nunmehr die Düsenkanäle 42 an einer schrägen Innenseite enden und somit das reaktive Ausgangsgemisch etwas unmittelbarer in den Faserstrahl eingespritzt werden kann.

In Fig. 4c sind sechs Düsenkanäle 42 angeordnet, die analog der Ausführungsform der Fig. 4b in den stirnseitigen Bereich des Düseneinsatzes 34 münden.

Aus der Fig. 4d kann man einen Düseneinsatz erkennen, bei dem die zwei erkennbaren Düsenkanäle 42 (es können jedoch mehrere vorgesehen sein) in einer umlaufenden keilförmigen Nut enden, die ein Zerstäuben des ausströmenden Polyurethans bewirken soll.

Mit der vorliegenden Erfindung ist ein Mischkopf angegeben, bei dem sich mit hin und her beweglichem Reinigungskolben eine gute Benetzung mit reaktivem Ausgangsmaterial erreichen lässt.

**Bezugszeichenliste**

| | |
|---|---|
| 10 | Mischkopf |
| 12 | Zufuhr für reaktive Komponente 1 |
| 14 | Zufuhr für reaktive Komponente 2 |
| 15 | Verschlussstopfen |
| 16 | Rücklauf für reaktive Komponente 1 |
| 18 | Rücklauf für reaktive Komponente 2 |
| 20 | Mischkammer |
| 22 | Düsenöffnung |
| 24 | Steuerkolben |
| 26 | Kolbenantrieb für Steuerkolben |
| 28 | Reinigungskolben |
| 30 | Buchse |
| 32 | Faser-Förderkanal |
| 34 | Düseneinsatz |
| 36 | Auslaufrohr |
| 38 | Auslaufkanal |
| 40 | Ringnut |
| 42 | Düsenkanal |
| 44 | Luftanschluss |
| 46 | Luftkanal |

## Patentansprüche

1. Vorrichtung zum Herstellen von mit Verstärkungsfasern durchsetzten Kunststoffteilen
- mit einer Mischkammer (20) zum Erzeugen eines Gemisches aus chemisch reaktiven Kunststoffkomponenten,
- mit einer der Mischkammer nachgeordneten Auslaufkammer (38), in der ein Reinigungskolben (28) hin- und her beweglich geführt ist, in dem ein Faser-Förderkanal (32) ausgebildet ist, wobei an der Stirnseite des Reinigungskolbens eine Düse (34) vorgesehen ist, durch die sich der Faser-Förderkanal (32) erstreckt,
**dadurch gekennzeichnet, dass**
am Außenumfang der Düse (34) eine von ihrem Ende beabstandete zumindest teilweise umlaufende Ringnut (40) angeordnet ist, die derart positionierbar ist, dass in einer ersten Arbeitsposition eine Strömungsverbindung zwischen der Mischkammer und der Ringnut (40) gebildet ist und in einer anderen Arbeitsposition des Reinigungskolbens (28) die Strömungsverbindung zwischen der Mischkammer und der Ringnut (40) unterbrochen ist, dass zwischen der Ringnut (40) und dem auslassseitigen Ende der Düse (34) zumindest ein, vorzugsweise eine Mehrzahl von Düsenkanälen (42) in der Düse ausgebildet sind, die im wesentlichen stirnseitig der Düse in die Auslaufkammer (38) münden.

2. Vorrichtung nach Anspruch 1,
**dadurch gekennzeichnet,**
**dass** die Düsenkanäle (42) radial außerhalb des Faser-Förderkanals in die Auslaufkammer münden.

3. Vorrichtung nach Anspruch 1 oder 2,
**dadurch gekennzeichnet,**
**dass** die Düsenkanäle (42) in einer Erweiterung, insbesondere einer linsen- oder kreisförmigen Erweiterung, in der Auslaufkammer enden.

4. Vorrichtung nach Anspruch 1 oder 2,
**dadurch gekennzeichnet,**
**dass** die Düsenkanäle in einer keilförmigen Nut enden.

5. Vorrichtung nach Anspruch 1 oder 2,
**dadurch gekennzeichnet,**
**dass** die Düsenkanäle (42) umfangsmäßig gleichmäßig verteilt um den Faser-Förderkanal (32) angeordnet sind.

6. Vorrichtung nach einem der Ansprüche 1 bis 5,
**dadurch gekennzeichnet,**
**dass** die Achsen der Düsenkanäle (42) zumindest in ihrem Auslaufbereich einen Winkel im Bereich von 5 bis 85 °, vorzugsweise von 10 bis 50°, mit der Achse des Faserförderkanals (32) einschließen.

7. Vorrichtung nach einem der vorhergehenden Ansprüche,
**dadurch gekennzeichnet,**
**dass** alle Düsenkanäle (42) derart ausgerichtet sind, dass sich deren gedachte Verlängerung in einem Schnittpunkt schneiden.

8. Vorrichtung nach einem der Ansprüche,
**dadurch gekennzeichnet,**
**dass** der Faser-Förderkanal (38) mit kreisförmigem Querschnitt ausgebildet ist.

9. Vorrichtung nach einem der vorhergehenden Ansprüche,
**dadurch gekennzeichnet,**
**dass** bezüglich der Bewegungsrichtung des Reinigungskolbens (28) zur Strömungsverbindung mit der Mischkammer versetzt zumindest eine Luftführungsbohrung (46) vorgesehen sind.

10. Vorrichtung nach Anspruch 9,
**dadurch gekennzeichnet,**
**dass** die Luftführungsbohrung (46) zumindest in einer Position der Düse mit der Ringnut (40) in Verbindung bringbar ist.

11. Vorrichtung nach Anspruch 9 oder 10,
**dadurch gekennzeichnet,**
**dass** die zumindest eine Luftführungsbohrung (46) derart angeordnet ist, dass sie bei der Reinigungskolbenposition, bei der die Mischkammer mit der Ringnut (40) in Strömungsverbindung steht, unmittelbar in die Auslaufkammer (38) münden.

12. Vorrichtung nach Anspruch 9 bis 11,
**dadurch gekennzeichnet,**
**dass** die Achsen der Luftführungsbohrungen (46) zumindest in ihrem Auslaufbereich einen Winkel im Bereich von 5 bis 85 ° mit der Achse der Auslaufkammer (38) einschließen.

## Claims

1. An apparatus for producing plastic pasts interspersed with reinforcing fibres
- with a mixing chamber (20) for producing a mixture of chemically reactive plastic components,
- with an outlet chamber (38), arranged downstream of the mixing chamber, in which a cleaning ram (28) is guided movably to and fro, in which a fibre conveying channel (32) is constructed, wherein on the end face of the cleaning ram a nozzle (34) is provided, through which the fibre conveying channel (32) extends,
**characterized in that**
on the outer circumference of the nozzle (34) an at least partially circumferential annular groove (40) is arranged at a distance from its end, which annular groove is able to be positioned such that in a first working position a flow connection is formed between the mixing chamber and the annular groove (40), and in another working position of the cleaning ram (28) the flow connection between the mixing chamber and the annular groove (40) is interrupted, that between the annular groove (40) and the end of the nozzle (34) on the outlet side at least one, preferably a plurality of nozzle channels (42) are constructed in the nozzle, which open out substantially on the end face of the nozzle into the outlet chamber (38).

2. The apparatus according to Claim 1,
**characterized in that**
the nozzle channels (42) open out into the outlet chamber radially outside the fibre conveying channel.

3. The apparatus according to Claim 1 or 2,
**characterized in that**
the nozzle channels (42) terminate in the outlet chamber in a widening, in particular a lentiform or circular widening.

4. The apparatus according to Claim 1 or 2,
**characterized in that**
the nozzle channels terminate in a wedge-shaped groove.

5. The apparatus according to Claim 1 or 2,
**characterized in that**
the nozzle channels (42) are arranged circumferentially distributed uniformly around the fibre conveying channel (32).

6. The apparatus according to one of Claims 1 to 5,
**characterized in that**
the axes of the nozzle channels (42) form at least in their outlet region an angle in the range of 5 to 85°, preferably of 10 to 50°, with the axis of the fibre conveying channel (32).

7. The apparatus according to one of the preceding claims,
**characterized in that**
all the nozzle channels (42) are aligned such that their imaginary extensions intersect in an intersection point.

8. The apparatus according to one of the claims,
**characterized in that**
the fibre conveying channel (38) is constructed with a circular cross-section.

9. The apparatus according to one of the preceding claims,
**characterized in that**
at least one air-directing bore (46) is provided offset with respect to the direction of movement of the cleaning ram (28) for flow connection with the mixing chamber.

10. The apparatus according to Claim 9,
**characterized in that**
the air-directing bore (46) is able to be brought in connection with the annular groove (40) at least in one position of the nozzle.

11. The apparatus according to Claim 9 or 10,
**characterized in that**
the at least one air-directing bore (46) is arranged such that it opens directly into the outlet chamber (38) in the cleaning ram position in which the mixing chamber is in flow connection with the annular groove(40).

12. The apparatus according to Claim 9 to 11,
**characterized in that**
the axes of the air-directing bores (46) form at least in their outlet region an angle in the range of 5 to 85° with the axis of the outlet chamber (38).

## Revendications

1. Dispositif de fabrication d'éléments en plastique contenant des fibres de renforcement
- comprenant une chambre de mélange (20) pour produire un mélange de composantes de plastique à réaction chimique,
- comprenant une chambre de sortie (38) en aval de la chambre de mélange dans laquelle un piston de nettoyage (28) est dirigé d'avant en arrière, dans lequel un canal de transport de fibres (32) est formé, sachant que sur le côté avant du piston de nettoyage est prévue une buse (34) à travers laquelle le canal de transport de fibres (32) s'étend,
**caractérisé en ce que**
sur le pourtour extérieur de la buse (34) est disposée une rainure annulaire (40) au moins partiellement périphérique à distance de son extrémité, laquelle peut être positionnée de sorte que dans une première position de travail, une liaison d'écoulement est formée entre la chambre de mélange et la rainure annulaire (40) et dans une autre position de travail du piston de nettoyage (28), la liaison d'écoulement entre la chambre de mélange et la rainure annulaire (40) est interrompue, qu'entre la rainure annulaire (40) et l'extrémité côté sortie de la buse (34, au moins un, de préférence une pluralité de canaux de buse (42) sont formés dans la buse, lesquels débouchent dans la chambre de sortie (38) essentiellement à l'avant de la buse.

2. Dispositif selon la revendication 1, **caractérisé en ce que** les canaux de buse (42) débouchent dans la chambre de sortie radialement hors du canal de transport de fibres.

3. Dispositif selon la revendication 1 ou 2, **caractérisé en ce que** les canaux de buse (42) terminent dans un élargissement, en particulier un élargissement en forme de lentille ou de cercle, dans la chambre de sortie.

4. Dispositif selon la revendication 1 ou 2, **caractérisé en ce que** les canaux de buse (42) terminent dans une rainure conique.

5. Dispositif selon la revendication 1 ou 2, **caractérisé en ce que** les canaux de buse (42) sont disposés en étant répartis régulièrement sur le pourtour du canal de transport (32).

6. Dispositif selon l'une des revendications 1 à 5, **caractérisé en ce que** les axes des canaux de buse (42) incluent un angle, avec l'axe du canal de transport (32), au moins au niveau de leur sortie, situé dans la plage de 5 à 85°, de préférence de 10 à 50°.

7. Dispositif selon l'une des revendications précédentes, **caractérisé en ce que** tous les canaux de buse (42) sont ainsi alignés que leur prolongement imaginaire coupe un point d'intersection.

8. Dispositif selon l'une des revendications précédentes, **caractérisé en ce que** le canal de transport de fibres (32) est de section carrée.

9. Dispositif selon l'une des revendications précédentes, **caractérisé en ce qu'**en ce qui concerne le sens de déplacement du piston de nettoyage (28) décalé par rapport à la liaison d'écoulement avec la chambre de mélange, au moins un perçage de ventilation (46) est prévu.

10. Dispositif selon la revendication 9, **caractérisé en ce que** le perçage de ventilation (46) peut être amené en liaison avec la rainure annulaire (40) au moins dans une position de la buse.

11. Dispositif selon la revendication 9 ou 10, **caractérisé en ce que** l'au moins un perçage de ventilation (46) est ainsi disposé que dans la position du piston de nettoyage dans laquelle la chambre de mélange est en liaison d'écoulement avec la rainure annulaire (40), il débouche directement dans la chambre de sortie (38).

12. Dispositif selon les revendications 9 à 11, **caractérisé en ce que** les axes des perçages de ventilation (46) incluent un angle, avec l'axe de la chambre de sortie (38), situé dans la plage de 5 à 85°.
